# EUROPEAN PATENT APPLICATION

(11) **EP 4 527 597 A1**
(43) Date of publication of application: **26.03.2025**
(21) Application number: 24197468.2
(22) Date of filing: 30.08.2024
(51) Int. Cl.: B29C 65/20, B29C 65/14, B29C 65/82, F16G 3/10, B29C 65/06, B29C 65/10, B29C 65/16, B29L 31/00

(54) **SPLICING OF THERMOPLASTIC ELASTOMER BELTS BY WELDING**

(30) Priority: 19.09.2023 US 202363583616 P
(71) Applicant: ContiTech Deutschland GmbH, 30175 Hannover (DE)
(72) Inventor: Bäuerle-Müller, Christel, 30175 Hannover (DE); Minkin, Andrey, 30175 Hannover (DE); Seibold, Sebastian, 30175 Hannover (DE); Podias, Stavros, 30175 Hannover (DE); Kantorek, Frank, 30175 Hannover (DE); Bachir, Mohamad, Fairlawn, 44333 (US); Brown, Donald, Fairlawn, 44333 (US)
(74) Representative: Continental Corporation

(57) **Abstract**

Process for manufacturing an endless reinforced belt, by splicing an open-ended reinforced belt comprising a first thermoplastic elastomer cover layer, a reinforcing fabric comprising polyolefin yarn and a second thermoplastic elastomer cover layer in that order, comprises thermoplastic welding of the opposing ends of the open-ended reinforced belt with each other in a pressurised overlapping assembly in which a heated portion of the first cover layer on one end of the belt and a heated portion of the second cover layer on the opposing end of the belt are overlapping and in contact with each other, and wherein the reinforcing fabric is not recrystallised or melted during the thermoplastic welding. The endless belt produced is preferably a conveyor belt.

## Description

The present invention relates to a thermoplastic welding process for the manufacture of an endless reinforced belt by splicing an open-ended reinforced belt, comprising a first thermoplastic elastomer (TPE) cover layer, a reinforcing fabric comprising one or more polyolefin yarns, and a second thermoplastic elastomer (TPE) cover layer in this order. The present invention further relates to endless reinforced belts obtainable by such a process.

### State of the art

Many types of reinforced belts including a reinforcing element such as a fabric or cords are known which are usually based on an elastomer or thermoplastic matrix. A recent development are reinforced belts based on a thermoplastic elastomer matrix. Endless belts are commonly produced by splicing open-ended belts. In the prior art, numerous belt splicing techniques are known.

The production of endless reinforced belts based on elastomer matrix or cover layers requires end-to-end connection of the corresponding reinforced open-ended belt. According to the prior art this is carried out by splicing the ends via a vulcanization process or by splicing the ends by means of a mechanical fastener.

When using the vulcanization process for splicing, the reinforcement in the elastomer belt must have a high melting point so that the vulcanization conditions does not harm the reinforcement. For instance, splicing conditions can be 10 bars, 150°C, and 30 min. For these conditions, reinforcement materials with high melting points are necessary such as polyamide (270°C or higher), polyester (250°C or higher) or steel (above 1000°C).

Thermoplastic reinforced belts such as PVC belts or thermoplastic elastomer (TPE) reinforced belts such as TPU belts are usually of lower tensile strength and different methods are applied for connection of such belts. A vulcanization used for elastomer belts is not feasible for thermoplastic belts or thermoplastic elastomer belts. Mechanical fasteners are widely used for thermoplastic belts or thermoplastic elastomer belts. Alternatively, thermoplastic welding is used at very high temperatures. Also in this case, the selected reinforcing material must be appropriate to ensure that the high temperatures do not damage the reinforcement.

A common mode of thermoplastic welding is the so called butt welding also called end to end welding wherein opposing ends of an open-ended belt are heated and pressed together to form the connection.

A rather new development are TPE-belts which include reinforcing polyolefin fabric, which can substitute commonly used tension members of reinforced belts. Such TPE-belts make a vulcanization obsolete and enable an easy recycling concept. In fact, a particular advantage is that such TPE-belts including reinforcing polyolefin fabric enable much easier recycling as compared to conventional reinforced belts. A reason for this improved recycling property is the low melting point of the reinforcing polyolefin fabric.

On the other hand, splicing of TPE belts including reinforcing polyolefin fabric to produce endless belts is impeded as compared to conventional reinforced belts. For splicing, vulcanization is not possible since TPE does not crosslink. Moreover, although a low melting point of the polyethylene is advantageous for recycling the belt, it has the disadvantage that the tensile strength of the polyethylene decreases significantly at higher temperatures due to recrystallization or melting and remains low even after cooling or after re-solidification.

WO 2021/188760 A1 relates to a method of manufacturing a reinforced, food-grade belt, comprising a thermoplastic elastomeric belt body material in which a plurality of thermoplastic synthetic filaments are embedded. This document also describes manufacturing of an endless belt, wherein the ends of belt are fused together and the filaments are melted during the fusing step.

As discussed above, subjecting polyolefin reinforcement to relatively high temperature which may even lead to melting of the reinforcing fabric should reduce the tensile strength drastically. A low tensile strength of endless belts may be acceptable in some technical applications, but drastically limits the possible technical applications.

### Description of the invention

Accordingly, the object of the invention is to provide a method for producing an endless reinforced belt by splicing an open-ended belt including a polyolefin reinforcement by thermoplastic welding, so that the mechanical properties of the individual components and of the belt is not negatively influenced and the belt ends are properly connected. The peel adhesion properties can be tested by determination of the shear force.

Since the reinforcing fabric inside the TPE belt is primarily responsible for the tensile strength of the TPE belt, it is assumed that it is important that the reinforcing fabric is not heated to high temperatures during the splicing process. Thus, the object of the invention is to provide a process for splicing the ends of a reinforced TPE-belt, wherein the including reinforcing polyolefin fabric is not melted, preferably not recrystallized.

The inventors found that in manufacturing an endless belt, where the ends are spliced butt to butt, the tensile strength of the joint is significantly reduced. It is assumed that this is at least in part caused by undesired heat treatment of the reinforcing fabric.

Surprisingly, it was however found that endless TPE belts including polyolefin based reinforcement with a high tensile strength can be achieved by thermoplastic welding in an overlapping configuration.

Accordingly, in a first aspect, the present invention is directed to a process for the manufacture of an endless reinforced belt by splicing an open-ended reinforced belt, comprising a first thermoplastic elastomer (TPE) cover layer, a reinforcing fabric comprising one or more polyolefin yarns, and a second thermoplastic elastomer (TPE) cover layer in this order, wherein the process comprises thermoplastic welding of the opposing ends of the open-ended reinforced belt with each other in a pressurized overlapping assembly in which a heated first end portion of the first TPE cover layer on one end of the belt and a heated second end portion of the second TPE cover layer on the opposing end of the belt are overlapping and in contact with each other,
wherein the first end portion and the second end portion are heated to soften or melt a surface region of each of the first and second end portions to provide the heated first and second end portions,
wherein the opposing ends of the belt with the heated first and second end portion are overlapped and pressed together to provide the pressurized overlapping assembly, and
wherein the reinforcing fabric is not melted during the thermoplastic welding.

The inventive process allows a fast and clean connection of reinforced TPE belts without loss in tensile strength. Moreover, an improved shear force is achieved.

It is assumed that the inventive process makes it possible that the reinforcement fabric is not heated during the process to such an extent that a deterioration of the tensile strength is caused. In particular, there is enough material between the heated cover layers and the reinforcement layer. The inventive process does not require heating of the belt ends at the interface, but heating is effected only on one end portion of the two cover layers at one end of the belt. This allows an operation where the end portions of each cover layer are heated to soften or melt a surface region of cover layer, wherein the temperature inside the TPE belt remains at a sufficiently low level so that melting and recrystallization of the reinforcing fabric can be avoided.

The contact area of the spliced first and second thermoplastic elastomeric cover layers is usually larger than the contact area that results from splicing the interfaces (end to end). In the inventive process, the reinforcing fabric is not melted, thus maintaining its tensile strength.

In the following, the invention is described in detail.

The inventive process is a process for the manufacture of an endless reinforced belt by splicing an open-ended reinforced belt. The open-ended reinforced belt comprises a first thermoplastic elastomer (TPE) cover layer, a reinforcing fabric comprising one or more polyolefin yarns, and a second thermoplastic elastomer (TPE) cover layer in this order.

The reinforcing fabric comprising one or more polyolefin yarns used in the inventive process can be a common reinforcing fabric available on the market. The reinforcing fabric used in the process according to the invention may be composed of one or more layers. Preferably, the reinforcing fabric is a monolayer. The polyolefin yarns can be formed from one single yarn or a multitude of single yarns, which are plied and twisted together.

The reinforcing fabric comprises one or more polyolefin yarns. The polyolefin yarns can be made from any polyolefin suitable for manufacturing fibers and/or yarns. The one or more polyolefin yarns are preferably selected from polyethylene yarns, preferably ultrahigh molecular weight polyethylene (UHMWPE) yarns, polypropylene yarns and combinations thereof.

The polyethylene in the polyethylene yarns is preferably a polyethylene with a molecular weight of at least 1,000,000 g/mol and more preferably with a molecular weight Mw of from 2,000,000 to 6,000,000 g/mol. Polyethylene with such molecular weight is generally referred to as ultrahigh molecular weight polyethylene (UHMWPE). The molecular weight Mw in this case can be determined via the intrinsic viscosity ("IV", as measured on solution in decalin at 135°C), which is a measure for the molecular weight, but can more easily be determined than actual molecular weight parameters like Mn and Mw. There are several empirical relations between IV and Mw. For the purposes of this invention, the molecular weight Mw is calculated from the intrinsic viscosity via the empirical equation Mw = 5.37 * 104 [IV]1.37 (see EP 0504954 A1).

UHMWPE yarns are particularly favorable as they may provide a typical high tensile strength of e.g. 528 N to 636 N per single yarn (at a linear density of 1760 dtex) when tested according to ISO 2062. Accordingly, UHMWPE yarns are preferably used as yarn in the length (or warp) direction of the belt.

In a preferred embodiment, the one or more polyolefin yarns comprises or are polyethylene yarns, preferably UHMWPE yarns. In a further preferred embodiment, the one or more polyolefin yarns comprises or are polyethylene yarns, preferably UHMWPE yarns, and polypropylene yarns.

In a particularly preferred embodiment, the reinforcing fabric comprises polyethylene yarns, preferably UHMWPE yarns, in the length direction of the belt, wherein the yarns in the width direction of the belt may be polyolefin yarns, preferably polypropylene yarns.

Polypropylene yarns for the use in this invention preferably provide a tensile strength of from 60 N to 300 N per single yarn (at a linear density of 930 to 4400 dtex, respectively), which is sufficiently lower than the tensile strength of the UHMWPE yarns. Accordingly, polypropylene yarns are preferably used in the width (or weft) direction of the belt.

In the reinforcing fabric the surfaces of the respective polyolefin yarns can be modified to provide any desired properties such as activation of the surface (to promote adhesion of thermoplastic elastomer applied thereon), cleaning or protection of the yarns, e.g. by covering the yarns with a protective coating. The polyolefin yarns of the reinforcing fabric can be modified with a surface finishing of a polymer film.

The open-ended reinforced belt and hence the endless reinforced belt produced comprises a first thermoplastic elastomer (TPE) cover layer and a second thermoplastic elastomer (TPE) cover layer, between which the reinforcing fabric comprising one or more polyolefin yarns is located.

The first and second cover layers are based on a thermoplastic elastomer (TPE). The thermoplastic elastomer of the first and second cover layer may be different, but is usually the same. The thermoplastic elastomer can be any thermoplastic elastomer known by the skilled person.

The thermoplastic polymer of the first and second cover layers is preferably selected from thermoplastic polyolefin (TPO), thermoplastic vulcanizate (TPV), preferably non-fluoropolymer TPV, or thermoplastic polyurethane (TPU), wherein TPU is preferred. Accordingly, the first and second TPE cover layers are preferably selected from TPO cover layers, TPV cover layers and TPU cover layers.

The thermoplastic elastomer is preferably thermoplastic polyurethane (TPU). Suitable thermoplastic elastomers also include, for example, EPDM (ethylene propylene diene rubber) or mixtures thereof with polyolefins, preferably in the form of polypropylene. Such mixtures can be used as TPO (thermoplastic polyolefin) or TPV (thermoplastic vulcanisate = cross-linked "thermoplastic polyolefin"). A particularly suitable polypropylene which can be used in such blends is, for example, a polypropylene with a density of 0.90 to 0.91 g/cm³. Other suitable thermoplastic elastomers include ethylene acrylate rubber (AEM) and acrylate rubber (ACM), preferably in combination with polyamide.

An ethylene-propylene-diene rubber having an ethylene content in the range of 45 to 75% by weight and particularly 45 to 55% by weight is preferred as the EPDM. The diene content here is suitable in the range from 0.1 to 12% by weight, preferably in the range from 2 to 10% by weight and particularly preferably in the range from 3 to 9% by weight. Any dienes used in EPDM can be used here as dienes, with cyclopentadiene, ethylidene norbornene and 1 ,4-hexadiene being preferred dienes.

The first and second thermoplastic elastomer cover layers may also contain conventional additives, such as fibers or fillers for reinforcing purposes, or formulation auxiliaries. However, the thermoplastic elastomer and/or the thermoplastic polymer preferably contain such additives in a proportion of up to 40% by weight at most, for example in a proportion of 10 to 30% by weight, with the balance being the thermoplastic elastomer.

The first and second thermoplastic elastomer cover layers may each have a thickness in the range of 0.5 to 30 mm, preferably from 1 to 25 mm, more preferably from 1 to 10 mm. The thickness of the first and second thermoplastic elastomer cover layers may be the same or different.

According to the inventive process, the splicing of the open-ended reinforced belt is a thermoplastic welding of the opposing ends of the open-ended reinforced belt with each other in a pressurized overlapping assembly in which a heated first end portion of the first TPE cover layer on one end of the belt and a heated second end portion of the second TPE cover layer on the opposing end of the belt are overlapping and in contact with each other.

Thermoplastic welding which may be also called melt welding is a common method to join components made of thermoplastics or thermoplastic elastomers. It generally includes heating the portions of the components to be joined so that a surface region of the portions is softened or melted. The heated portions are brought together under pressure so that after cooling the joint is formed.

A common method in the field of splicing open-ended belts to form endless belts is butt welding wherein the two ends of the belt are heated and pressed against each other (end-to-end configuration). Other well-known methods are stepped splice, overlapping splice and finger splice. It is also possible to manufacture detachable connections with different types of fasteners.

According to the present invention, an overlap thermoplastic welding is effected wherein the ends of the belt are connected in an overlapping assembly. In this configuration, the ends of the belt are overlapping so that an end portion of one side of the belt is on top of the end portion of the opposing side of the belt. Obviously, for this assembly the end portions which comes into contact with each other in the overlapping assembly are to be heated.

In order to provide the heated first and second end portions in the process of the invention, the first end portion of the first TPE cover layer on one end of the belt and the second end portion of the second TPE cover layer on the opposing end of the belt are heated to soften or melt a surface region of each of the first and second end portions.

The first and second end portions can be heated by any means known by the skilled person, e.g. by means of a heat source selected from a hot plate, infrared irradiation, laser irradiation, a hot air fan or by means of friction such as vibration and/or rotation. In a preferred embodiment, a hot plate is used for heating the first and second end portions, i.e. the thermoplastic welding is carried out by means of hot plate welding. A further preferred embodiment is heating by IR irradiation.

Accordingly, the thermoplastic welding according to the invention may be carried out by means of hot plate welding, infrared welding, laser welding, friction welding, or heat fusion.

Suitable heating temperatures and heating times for the heating of the first and second end portions depend from each other and inter alia from the specific material of the cover layers and their thickness as well as the heating mode so that suitable ranges may vary. It should be also clear that heating temperature and heating time depend from each other, i.e. a higher heating temperature usually corresponds to a shorter heating time and vice versa. What is important is that the heating is effected to such an extent that a sufficient softening or melting of a surface region of the cover layers is achieved and at the same time a too high thermal loading of the reinforcing fabric is avoided in the heating step and also during the joining step in the pressurized overlapping assembly.

The heating temperature to heat the first and second end portions may be for instance in the range of 170 to 400 °C, preferably 180 to 250 °C, more preferably 190 to 240 °C. The warming up time to heat the first and second end portions is for instance in the range of 5 to 120 seconds, preferably 10 to 50 seconds, more preferably 15 to 45 seconds. The warming up time refers to the time where the first and second end portions are subjected to the heating temperature. Depending on the heating method used, the type of materials used and their thickness, different adaption times are to be considered until the heating temperature is reached, e.g. when a hot plate is used. In general the more melted material is generated the less pressure is needed.

As mentioned, the heating temperature and heating time may also depend on the heating mode used.

When for instance the first and second end portions are heated by means of a hot plate it is preferred that the hot plate have a temperature of 170 to 400 °C, preferably 190 to 240 °C, more preferably 200 to 230°C, wherein the warming up time to heat the first and second end portions is in the range of 5 to 120 seconds, preferably 10 to 50 seconds, more preferably 15 to 45 seconds.

As the skilled person knows in hot plate welding the parts to be heated, in the present case the first and second end portions, are pressed against the heating element usually called heating plate with a certain adaption pressure and for a certain adaption time before the warming up without pressure takes place.

When the first and second end portions are heated by means of infrared irradiation, the heating temperature may be for instance in the range of 170 to 400 °C, preferably 170 to 240°C, more preferably 180 to 220°C, wherein the warming up time to heat the first and second end portions may be in the range of 2 to 120 seconds, preferably 3 to 40 seconds, more preferably 5 to 30 seconds.

In order to provide the pressurized overlapping assembly, the opposing ends of the belt with the heated first and second end portion are overlapped and pressed together. A pressure that is too low may result in the splicing not being sufficiently strong, while a pressure that is too high may squeeze the melted thermoplastic elastomeric cover layers out of the region to be bonded. A suitable assembly pressure may also depend on the previous heating procedure such as on the extent of softening or melting of the end portions achieved during heat treatment.

According to the process of the present invention, the reinforcing fabric is not melted during the thermoplastic welding. It is more preferred that the reinforcing fabric is also not subject to a recrystallization during the thermoplastic welding.

As discussed above, the tensile strength of the reinforcing fabric containing polyolefins decreases dramatically once it is melted. Polyolefins, especially high molecular weight polyethylene, have a high parallel orientation and crystallinity. This structure gives polyolefins a high specific strength, which, however, is lost when the physical structure is altered by higher temperatures.

Such a change in the physical structure is particularly apparent during melting, however, structural changes can also occur before the melting point is reached, namely when the polyolefin recrystallizes. Therefore, it is preferable to avoid heating the reinforcing fabric to the point where it recrystallizes.

It is preferred that the temperature of the reinforced fabric during thermoplastic welding is not more than 140 °C. A short time temperature of 130°C is possible. By avoiding that the reinforcing fabric is subjected to high temperatures during the thermoplastic welding, in particular for a longer time, a deterioration of the fabric can be minimized, in particular recrystallization can be minimized.

When the assembling pressure is released and the assembly cools down, the endless reinforced belt is obtained.

In a second aspect, the present invention is directed to an endless reinforced belt obtainable by the process according to the invention as described above.

All aspects, proportions and embodiments described above for the inventive method, in particular with respect to the splicing, the reinforcing fabric and the thermoplastic elastomer cover layers also apply to the inventive belt so that reference is made thereto.

The endless reinforced belt according to the invention can have any shape of a belt for force transmission, such as e.g. a toothed belt or a V-shaped belt, wherein the reinforcing fabric is sandwiched between upper and lower thermoplastic elastomer cover layers.

The endless reinforced belt according to the invention can be any belt and is preferably a conveyor belt, a timing belt or a power transmission belt, preferably a conveyor belt.

In the following, the present invention will be further illustrated in more detail using a few exemplary embodiments and drawings, which, however, should not be understood in any way as limiting the scope of protection of the application.

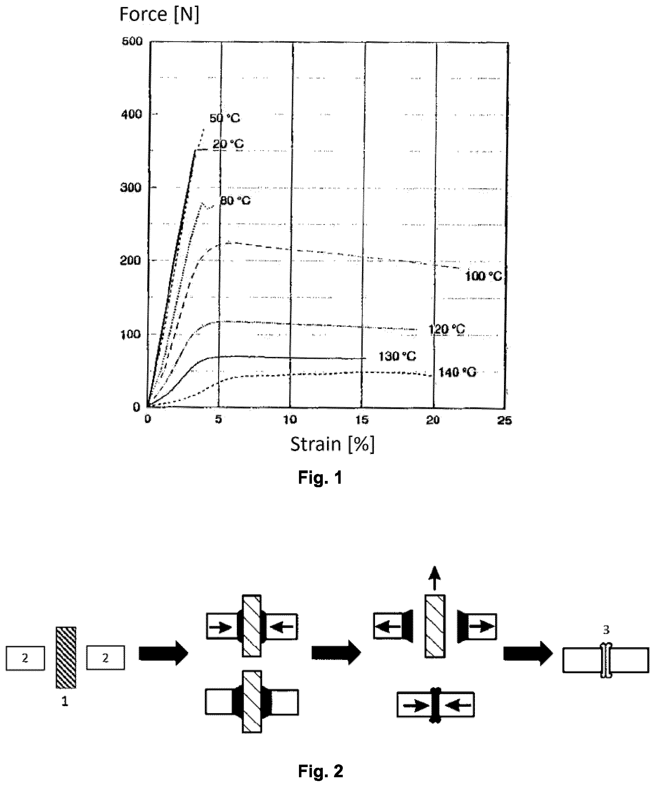

Fig. 1 shows the dependency of the tensile strength of a specific polyethylene yarn to the temperature. The polyethylene yarn is high molecular weight polyethylene yarn of 1760 dtex which is subjected to various temperature. The stress-strain graph according to DIN EN ISO 2062 was tested at different temperatures. Fig. 1 shows that a significant decrease of tensile strength occurs already at temperatures at about 100°C. The flow behavior at 140°C indicates that the melting temperature is near. It is assumed that the decrease of the tensile strength already at temperatures distant from the melting point is caused by recrystallization of the polyethylene.

Fig. 2 schematically describes the splicing of two opposing ends 1 of an open-ended reinforced belt by means of end-to-end thermal welding which is not according to the present invention. In a first step, the two opposing ends 1 of an open-ended reinforced belt to be spliced and a heating element 2 are provided (starting position). In the second step (adaption and warming up), the two opposing ends 1 are pressed against the heating element 2 and heated. In this regard, the two opposing ends 1 are pressed against the heating element 2 having a certain heating temperature with a certain adaption pressure and adaption time. Then, the two opposing ends 1 are warmed up for a certain time (warming up time). In the next step, the heating element is removed and the heated ends of the belt are pressed together to form a pressurized assembly with a certain assembly pressure. Then the pressure is released and after cooling, the connection is obtained.

The configuration as described for Fig. 2 is used in the following reference examples where the ends of the reinforced belt are spliced in an end-to-end configuration.

### Examples

In all following examples an open-ended TPU reinforced belt was spliced by thermoplastic welding.

The TPU belt employed comprises first and second TPE cover layers which are thermoplastic polyurethane (TPU) cover layers with a melting point of 130 to 230 °C. The TPU cover layers each have a thickness of up to 20 mm.

The TPU belt employed comprises a reinforcing fabric between the first and second cover layers. The reinforcing fabric comprises UHMWPE yarns in the length direction of the belt (warp direction) and polypropylene yarns in the width direction of the belt (weft direction).

Two welding techniques and three different test setups were investigated and the respective process parameters and test results were listed in Table 1.

The first welding method is hot plate welding and the second is infrared welding. In both welding techniques, a specific heating temperature was set to heat the portions of the TPU belt to be connected.

Hot plate welding requires direct contact between the portion to be heated and the heating element, wherein the portion is pressed against the heating element. The pressure with which the sample is pressed and the adaptation time, i.e. the duration of the pressing process, are also specified. The warm-up time describes the time in which the sample is warmed up without applying pressure. After removal of the heating element, the heated portions are then pressed against each other.

In IR welding there is no contact with the heating source so that adaption pressure and adaption time are meaningless. hence, only the heating temperature and the warming up time is given. After stopping IR irradiation, the heated portions are pressed against each other.

In the first test setup not according to the invention, the two ends of the open-ended reinforced belt are heated and the heated ends are pressed together in a configuration "end-to-end" which corresponds to butt welding. The assembling pressure is given in Table 1.

In the second test setup not according to the invention, the two ends of the TBE belt are spliced by overlapping the reinforcing fabric. For this purpose, an end part of the first cover layer was removed from one end of the belt and an end part of the second cover layer from the other end, so that the respective ends were only covered on one side with a cover layer. This method is referred to as fabric-to-fabric overlap. The assembling pressure is given in Table 1.

In the third test setup, the two ends of the TPU reinforced belt were spliced by overlap thermoplastic welding according to the process of the invention. This method is referred to as TPU to TPU area - overlap in Table 1.

According to this test setup according to the invention, a first end portion of the first TPU cover layer on one end of the reinforced belt and a second end portion of the second TPU cover layer on the opposing end of the reinforced belt are heated by a hot plate or by IR irradiation as discussed above. Then, the two ends of the reinforced belt are overlapped and pressed together to provide a pressurized overlapping assembly in which the heated first end portion and the heated second end portion of the second TPE cover layer on the opposing end of the belt are overlapping and in contact with each other. The assembling pressure is given in Table 1.

To determine and evaluate the peel adhesion properties, the shear force was tested.

The shear force was measured according to DIN EN 1465.

The shear force given in Table 1 was determined as the mean value of 5 trials carried out.

**Table 1**

| Welding | Test setup | Heating temperature [°C] | Pressure [MPa] | Adaption time [sec] | Warming up time [sec] | Pressure [MPa] | Shear force [N/mm] |
|---|---|---|---|---|---|---|---|
| Hot plate welding | End-to-end | 220 | 0.2 | 3 | 20 | 0.2 | 14.36 |
| | | 220 | 0.2 | 3 | 40 | 0.2 | 15.14 |
| | | 220 | 0.4 | 3 | 20 | 0.4 | 17.44 |
| | | 240 | 0.4 | 3 | 20 | 0.4 | 24.71 |
| | Fabric to fabric area - overlap | 220 | 0.2 | 3 | 15 | 0.2 | 26.91 |
| | | 220 | 0.2 | 3 | 5 | 0.2 | 27.46 |
| | TPU to TPU area - overlap | 220 | 0.2 | 3 | 20 | 0.2 | 30.25 |
| | | 220 | 0.2 | 3 | 40 | 0.2 | 43.54 |
| Infrared welding | End-to-end | 200 | | | 10 | 0.64 | 22.34 |
| | | 200 | | | 20 | 0.64 | 21.77 |
| | | 200 | | | 30 | 0.64 | 14.63 |
| | | 200 | | | 40 | 0.64 | 15.00 |
| | TPU to TPU area - overlap | 200 | | | 20 | 0.64 | 48.58 |
| | | 200 | | | 10 | 0.64 | 31.94 |

### List of reference signs

- 1: opposing ends of an open-ended reinforced belt
- 2: heating element or heating plate, respectively
- 3: connection between the two opposing ends

## Claims

1. A process for the manufacture of an endless reinforced belt by splicing an open-ended reinforced belt, comprising a first thermoplastic elastomer (TPE) cover layer, a reinforcing fabric comprising one or more polyolefin yarns, and a second thermoplastic elastomer (TPE) cover layer in this order, wherein the process comprises
thermoplastic welding of the opposing ends of the open-ended reinforced belt with each other in a pressurized overlapping assembly in which a heated first end portion of the first TPE cover layer on one end of the belt and a heated second end portion of the second TPE cover layer on the opposing end of the belt are overlapping and in contact with each other,
wherein the first end portion and the second end portion are heated to soften or melt a surface region of each of the first and second end portions to provide the heated first and second end portions,
wherein the opposing ends of the belt with the heated first and second end portion are overlapped and pressed together to provide the pressurized overlapping assembly, and
wherein the reinforcing fabric is not melted during the thermoplastic welding.

2. The process according to claim 1, wherein the reinforcing fabric is not recrystallized.

3. The process according to claim 1 or 2, wherein the one or more polyolefin yarns are selected from polyethylene yarns, preferably ultrahigh molecular weight polyethylene (UHMWPE) yarns, polypropylene yarns and combinations thereof.

4. The process according to one of the preceding claims, wherein the one or more polyolefin yarns comprises or are
- polyethylene yarns, preferably UHMWPE yarns, or
- polyethylene yarns, preferably UHMWPE yarns, and polypropylene yarns.

5. The process according to one of the preceding claims, wherein the reinforcing fabric comprises polyethylene yarns, preferably UHMWPE yarns, in the length direction of the belt, wherein the yarns in the width direction of the belt are preferably polypropylene yarns.

6. The process according to any one of the preceding claims, wherein the thermoplastic elastomer of the first and second cover layers is selected from thermoplastic polyolefin (TPO), thermoplastic vulcanizate (TPV), preferably non-fluoropolymer TPV, or thermoplastic polyurethane (TPU).

7. The process according to any one of the preceding claims,
wherein the first and second end portions are heated by means of a heat source selected from a hot plate, infrared irradiation, laser irradiation, a hot air fan or by means of vibration and/or rotation, and/or
wherein the thermoplastic welding is carried by means of hot plate welding, infrared welding, laser welding, friction welding, or heat fusion.

8. The process according to any one of the preceding claims, wherein
the heating temperature to heat the first and second end portions is in the range of 170 to 400 °C, preferably 180 to 250 °C, more preferably 190 to 240 °C, and/or the warming up time to heat the first and second end portions is in the range of 5 to 120 seconds, preferably 10 to 50 seconds, more preferably 15 to 45 seconds.

9. The process according to any one of the preceding claims, wherein
the first and second end portions are heated by means of a hot plate having a temperature of 170 to 400°C, preferably 190 to 240 °C, more preferably 200 to 230°C, to which the first and second end portions are pressed, wherein the warming up time to heat the first and second end portions is in the range of 5 to 120 seconds, 10 to 50 seconds, preferably 15 to 45 seconds,
the first and second end portions are heated by means of infrared irradiation resulting in a heating temperature of 170 to 400°C, preferably 170 to 240 °C, more preferably 180 to 220°C, wherein the warming up time to heat the first and second end portions is in the range of 2 to 120 seconds, preferably 3 to 40 seconds, more preferably 5 to 30 seconds.

10. The process according to any one of the preceding claims, wherein the first and second cover layers each have a thickness in the range of 0.5 to 30 mm, preferably from 1 to 25 mm, more preferably from 1 to 10 mm.

11. An endless reinforced belt obtainable by a process according to any one of the claims 1 to 10.

12. The endless reinforced belt according to claim 11, which is a conveyor belt, a timing belt or a power transmission belt, preferably a conveyor belt.
